# EUROPÄISCHE PATENTSCHRIFT

(11) **EP 0 482 040 B1**
(45) Veröffentlichungstag und Bekanntmachung des Hinweises auf die Patenterteilung: **19.05.1993**
(21) Anmeldenummer: 90910661.9
(22) Anmeldetag: 23.06.1990
(51) Int. Cl.: H02K 23/66, E05F 15/16

(54) **ELEKTROMOTORISCHER FENSTERHEBER**
ELECTRIC-MOTOR-DRIVEN WINDOW OPERATING SYSTEM
LEVE-VITRE COMMANDE PAR MOTEUR ELECTRIQUE

(30) Priorität: 11.07.1989 DE 3922698
(43) Veröffentlichungstag der Anmeldung: 29.04.1992
(73) Patentinhaber: Brose Fahrzeugteile GmbH & Co. KG, 96450 Coburg (DE)
(72) Erfinder: BECKER, Herbert, D-8630 Coburg (DE); JÜRJENS, Gerhard, D-8630 Coburg (DE); WAGNER, Klaus, D-8621 Gleu en (DE); SCHELHORN, Gerhard, D-8630 Coburg (DE); BRANDT, Carsten, D-8636 Weidach (DE); FREISLEBEN, Bernd, D-8623 Staffelstein (DE); KURZENDÖRFER, Reiner, D-8636 Coburg (DE)
(74) Vertreter: Ninnemann, Detlef, Dipl.-Ing.
(86) Internationale Anmeldenummer: EP9001024
(87) Internationale Veröffentlichungsnummer: WO9101060

(56) Entgegenhaltungen:
- EP-A- 0 149 418
- EP-A- 0 194 433
- EP-A- 0 252 481
- CH-A- 568 679
- DE-A- 3 240 080
- GB-A- 2 079 540
- GB-A- 2 174 253
- US-A- 4 110 676

## Beschreibung

Die Erfindung betrifft einen elektromotorischen Fensterheber nach dem Oberbegriff des Anspruchs 1.

Zum Heben und Senken von Fensterscheiben eines Kraftfahrzeugs sind elektromotorische Fensterheber bekannt, die zum Einbau in Türen von Kraftfahrzeugen geeignet sind und eine Antriebseinheit in Form eines Elektromotors mit angeschlossenem Getriebe oder eines Getriebemotors aufweisen, der über einen Schalter an einen Kraftfahrzeug-Akkumulator anschließbar ist.

Die in der Fahrzeugtür über den elektromotorischen Fensterheber hebbare oder absenkbare Fensterscheibe ist dabei an ihrer unteren Kante an einem Führungsschlitten befestigt, der entlang einer Profilschiene mittels bspw. einer geschlossenen Seilschleife auf- und abbewegbar ist. Die Seilschleife umschlingt eine Seiltrommel, die über bspw. ein Schneckengetriebe von dem Elektromotor in einer kompakten Antriebseinheit angetrieben wird, die neben dem Elektromotor und dem Schneckengetriebe die Seiltrommel enthält und an tragenden Teilen des Inneren der Fahrzeugtür bzw. einer Grundplatte ebenso wie die Profilschiene befestigt ist.

Alternativ hierzu kann die Antriebseinheit zum Betätigen eines Kreuzarm-Fensterhebers verwendet werden.

Da unterschiedliche Kräfte zum Heben und Absenken der Fensterscheibe erforderlich sind, ist die Antriebseinheit mit mit einer Steuer- und Regelschaltung, die mit einem Bedienungsschalter verbunden ist, sowie ggf. mit einem Drehzahlsensor verbunden. Je nach Stellung und Art der Betätigung des Bedienungsschalters wird die Fensterscheibe bis zu ihren Endstellungen gehoben oder abgesenkt bzw. verharrt in einer beliebigen Zwischenstellung, wobei die Steuer- und Regelelektronik einen gleichmäßigen Hebe- und Absenkvorgang bewirkt.

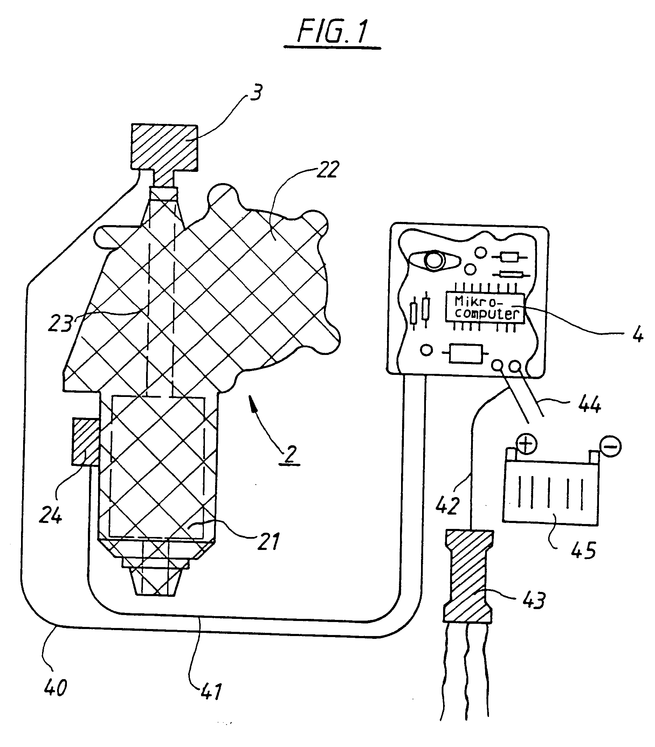

Figur 1 zeigt in schematischer Darstellung eine bekannte Anordnung eines elektromotorischen Fensterhebers und einer Steuer- und Regelschaltung in einer Kraftfahrzeugtür.

Bei dieser bekannten Anordnung besteht die Antriebseinheit aus einem Getriebemotor 2 mit einem Elektromotor 21 und einem angeschlossenem Getriebe 22, das in nicht näher dargestellter Weise mit der Seilschleife zum Heben und Senken der Fensterscheibe verbunden ist. Die Rotorwelle 23 ist mit einem Drehzahlsensor 3 mechanisch gekoppelt, der über eine Kabelleitung mit der in einem getrennten Gehäuse angeordneten Steuer- und Regelschaltung 4 verbunden ist. Über eine Leitung 41 ist die Steuer- und Regelschaltung 4 mit einem Steckkontakt 24 zur Stromversorgung des Elektromotors 21 verbunden. Eine Leitung 42 führt über einen Steckkontakt zum Bedienungsschalter im Fahrzeuginnenraum sowie über eine Leitung 44 zur Kraftfahrzeugbatterie 45.

Wie der in Figur 1 schematisch dargestellten Anordnung zu entnehmen ist, sind die Antriebseinheit 2 und die Steuer- und Regelelektronik 4 in getrennten Gehäusen angeordnet, die notwendigerweise im wesentlichen feuchtigkeitsdicht ausgeführt sein müssen; d. h. sich bildender Wasserdampf muß aus dem System austreten können, während Flüssigkeit in Form von bspw. Regenwasser durch die Membran nicht eintreten kann. Zwischen den getrennten Gehäusen sind mehrere Kabelverbindungen 40, 41, 42 zur Stromversorgung des Elektromotors 21 und zur Drehzahlerfassung für die Verbindung zwischen Drehzahlsensor 3 und Steuer- und Regelelektronik 4 erforderlich. Die Steckverbindungen 24, 43 müssen ebenso wie die Gehäuse zur Aufnahme der Antriebseinheit 2 und der Steuer- und Regelelektronik 4 feuchtigkeitsdicht ausgeführt sein, um Kurzschlüsse zu vermeiden.

Die getrennte Anordnung von Antriebseinheit 2 und Steuer- und Regelelektronik 4 erfordert somit einen hohen Bauaufwand und einen erheblichen Aufwand bei der Herstellung von Kabelverbindungen zwischen beiden Gehäusen sowie Anordnung feuchtigkeitsdichter Stecker und Buchsen. Die Verkabelung zwischen beiden Gehäusen bringt die Gefahr von Fehlern bei der Herstellung der Kabelverbindungen mit sich und bedingt insgesamt hohe Kosten bei der Montage des elektromotorischen Fensterhebers.

Ein weiteres Problem besteht darin, daß sich die Kabel 40, 41, 42 zwischen den getrennten Gehäusen zur Aufnahme der Steuer- und Regelelektronik einerseits und der Antriebseinheit andererseits in der Kraftfahrzeugtür bei hohem Nässegrad bewegen, so daß insgesamt ein hoher Dichtungsaufwand betrieben werden muß.

Schließlich ist zusätzlich beim Anbringen der Gehäuse in der Kraftfahrzeugtür ein großer Arbeitsaufwand erforderlich, da zwei separate Montagevorgänge durchgefährt werden müssen, d. h. jeweils getrennte Winkel zum Befestigen an der Türwand und entsprechende Befestigungsmittel vorgesehen werden müssen.

Ein weiterer Nachteil der bekannten Anordnung besteht darin, daß der Drehzahlsensor separat am Gehäuse der Antriebseinheit montiert werden muß.

Aus dem DE-GM 87 12 863.2 ist eine elektrische Maschine bekannt, die ein Gehäuse, stirnseitige Lagerschilde und einen Klemmkasten umfaßt, der eine Klemmleiste, Kabelzuführungsöffnungen und einen mit einer Dichtung versehenen Klemmdeckel aufweist. Zur Verringerung der Breite der elektrischen Maschine sowie zur Vereinfachung der Fertigungsmöglichkeiten ist der Klemmkasten der bekannten elektrischen Maschine integral in einem der stirnseitigen Lagerschilde der elektrischen Maschine ausgebildet. Dabei weist der Klemmkasten einen unter der Einhüllung der Mantelfläche des Lagerschildes gelegenen Hohlraum mit einem nach außen führenden Durchbruch im Lagerschild auf, der durch den Klemmdeckel lösbar verschlossen ist.

Der Klemmdeckel der bekannten Vorrichtung ist als rechtekkige Platte ausgebildet und eine Dichtung integral mit dem Klemmdeckel verbunden. Zusätzlich ist die Klemmleiste integral mit dem Klemmdeckel verbunden und trägt Anschlußbuchsen oder -stifte die mit kabelseitigen Kabelschuhen verbindbar sind. Die Kabelzuführungsöffnungen sind in der Mantelfläche des Lagerschildes eingelassen.

Bei dieser bekannten Vorrichtung ist zwar der Klemmkasten integraler Bestandteil der stirnseitigen Lagerschilde der elektrischen Maschine, durch die Festlegung der Anordnung des Klemmkastens in den stirnseitigen Lagerschilden wird jedoch eine feste Zuordnung des Klemmkastens zur elektrischen Maschine vorgegeben die eine variable Anordnung des Klemmkastens und damit der Steuerelektronik nicht zuläßt.

Der vorliegenden Erfindung liegt die Aufgabenstellung zugrunde, einen elektromotorischen Fensterheber der eingangs genannten Gattung zu schaffen, der mit einem geringen Bauteile- und Montageaufwand unter Ausschluß von Montagefehlern verbunden ist, der eine hohe Feuchtigkeitssicherheit ohne größeren Dichtungsaufwand gewährleistet und eine modulare Bauweise ermöglicht, bei der eine Antriebseinheit mit unterschiedlichen, leicht zugänglichen und auswechselbaren Steuer- und Regelschaltungen für unterschiedliche Kraftfahrzeugtypen und -ausführungen verbunden werden kann.

Diese Aufgabe wird durch das kennzeichnende Merkmal des Anspruchs 1 gelöst.

Die erfindungsgemäße Lösung gewährleistet einen geringen Bauteil- und Montageaufwand unter Ausschluß von Montagefehlern, da keine zusätzlichen Verkabelungen zwischen Antriebseinheit und Steuer- und Regelschaltung erforderlich sind. Durch die Anordnung sämtlicher Teile in einem feuchtigkeitsdichten, gemeinsamen Gehäuse ist.kein zusätzlicher Dichtungsaufwand erforderlich und es können billige Steckverbindungen verwendet werden, da sie ausschließlich in einem wasserdichten Raum angeordnet sind.

Eine vorteilhafte Weiterbildung der erfindungsgemäßen Lösung ist dadurch gekennzeichnet, daß die Steuer- und Regelelektronik auf einer Platine angeordnet ist, die in ein Anschlußteil des gemeinsamen Gehäuses einsetzbar oder einsteckbar ist, wobei die Platine mit einem Einschubmodul verbindbar ist, das in eine Öffnung des Anschlußteils des gemeinsamen Gehäuses einsteckbar ist und Steckkontakte aufweist, die mit entsprechenden Gegensteckkontakten der Antriebseinheit verbindbar sind und wobei das Einschubmodul eine dicht an dem gemeinsamen Gehäuse anliegende Aussenfläche aufweist.

Der modulare Aufbau ermöglicht die Verwendung einer bestimmten Antriebseinheit für unterschiedliche Kraftfahrzeugtypen und für unterschiedliche Ausführungsformen, wobei die Anpassung an den jeweiligen Kraftfahrzeugtyp und die Ausführungsart durch die Steuerelektronik bewirkt wird. So können verschiedene Elektronikschaltungen wie bspw. Einklemmschutzschaltungen, elektronische Schaltungen zum Regeln des Hoch- und Tiefgehens der Fensterscheibe und Schaltungen zur Fensterscheibenregelung in Verbindung mit einer Zentralverriegelung Verwendung finden. Dabei sorgen Führungselemente in der Gehäuseöffnung und am Einschubmodul für eine schnelle, sichere Montage, wobei die Kontaktierung der Steuer- und Regelelektronik mit der Antriebseinheit beim Einschieben vorgenommen wird, so daß zum einen eine Verpolungssicherheit gegeben ist-und zum anderen erheblich Zeit bei der Montage eingespart wird.

In einer alternativen Ausführungsform ist die Platine in den mittels eines Deckels verschließbaren Innenraum des Anschlußteils des gemeinsamen Gehäuses einsetzbar und über eine Kontakteinrichtung mit den Gegenkontakten der Antriebseinheit verbindbar.

Alternativ hierzu ist die Platine unmittelbar mit dem Dekkel des gemeinsamen Gehäuses verbunden und über eine Kontakteinrichtung mit den Gegenkontakten der Antriebseinheit verbindbar.

Auch in dieser Ausführungsform sind in modularer Bauweise unterschiedliche Platinenbestückungen für unterschiedliche Kraftfahrzeugtypen und unterschiedliche Ausführungsformen möglich, wobei die Anpassung an den jeweiligen Kraftfahrzeugtyp und die Ausführungsart durch die unterschiedliche Steuerelektronik der Platinen bewirkt wird. Dabei wird gleichzeitig sichergestellt, daß bei entsprechend gedrängter Bauweise eine leichte Zugänglichkeit des Anschlußteils gewährleistet ist und durch Einfügen der jeweiligen Platine die gewünschte Steuerfunktion realisiert werden kann.

Die alternative Verbindung der Platine mit dem Deckel ermöglicht eine einfache und übersichtliche sowie platzsparende Anordnung.

Analog zur Anordnung der Steuerelektronik auf einem Einschubmodul kann bei der Anordnung der Steuer- und Regelelektronik auf einer Platine mittels Führungselemente im Innenraum des Anschlußteils für eine schnelle, sichere Montage gesorgt werden, wobei die Kontaktierung der Steuer- und Regelelektronik mit der Antriebseinheit beim Einschieben der Kontakteinrichtung der Platine in entsprechende Gegenkontakte der Antriebseinheit vorgenommen wird, so daß zum einen eine Verpolungssicherheit gewährleistet und zum anderen ein minimaler Zeitaufwand bei der Montage gewährleistet ist.

Eine vorteilhafte Ausgestaltung der erfindungsgemäßen Lösung ist dadurch gekennzeichnet, daß das Einschubmodul einen Empfangsteil des Drehzahlsensors aufweist, der bei in das gemeinsame Gehäuse eingestecktem Einschubmodul das mit der Rotorwelle des Getriebemotors verbundene Geberteil des Drehzahlsensors kontaktiert oder dem Geberteil des Drehzahlsensors berührungsfrei gegenübersteht.

Diese Weiterbildung der erfindungsgemäßen Lösung erleichtert die Drehzahlabfrage und erspart die separate Montage eines Drehzahlsensors und dessen Verbindung mit der Steuer- und Regelelektronik. Dabei kann die Drehzahlabfrage mit oder ohne Wand zwischen der Antriebseinheit und dem die Steuer- und Regelelektronik aufnehmenden Teil des gemeinsamen Gehäuses erfolgen.

Eine vorteilhafte Weiterbildung der erfindungsgemäßen Lösung ist dadurch gekennzeichnet, daß das Einschubmodul aus einem die Steuer- und Regelelektronik aufnehmenden Einschubelement besteht, das auf einer Seite mit der senkrecht zum Einschubelement angeordneten Außenfläche verbunden ist und daß ein der Außenfläche gegenüberliegendes Steckelement aufweist, das den Empfangsteil des Drehzahlsensors und die Steckkontakte enthält, wobei in der Außenfläche eine Strom- und Signaldurchführung zum Verbinden der Steuer- und Regelelektronik mit einem Kraftfahrzeug-Akkumulator und einem Steuerschalter angeordnet ist und wobei in eine umlaufende Nut der Außenfläche oder in einer Abstufung der Außenfläche ein Dichtungsring eingesetzt ist.

Diese Weiterbildung spart zum einen den Anschluß eines Kabelbaumes an der Antriebseinheit bzw. dem Getriebemotor ein und sorgt zum anderen für eine einwandfreie Kontaktierung für die Stromversorgung der Antriebseinheit. Darüber hinaus wird eine einwandfreie Drehzahlerfassung ermöglicht, bei der keine die richtige Erfassung der Drehzahl beeinträchtigenden Kontakt- und Verbindungsprobleme auftreten.

Eine vorteilhafte Ausgestaltung der erfindungsgemäßen Lösung ist dadurch gekennzeichnet, daß das Steckelement eine stirnseitige, mittige Anschlagfläche zum Justieren der Empfangsteile des Drehzahlsensors aufweist, die zu beiden Seiten der Anschlagfläche und den an die Anschlagfläche anschließenden Steckkontakten angeordnet sind. Dabei kann der Drehzahlsensor wahlweise aus einem Hall-Sensor oder einem fotoelektrischen bzw. induktiven Sensor bestehen.

In dieser Bauform ist eine definierte Lage des Drehzahlsensors gewährleistet und es wird die Voraussetzung für eine berührungsfreie Drehzahlerfassung geschaffen. Darüber hinaus beansprucht diese Weiterbildung der erfindungsgemäßen Lösung einen minimalen Raum, so daß eine insgesamt äußerst kompakte Baueinheit entsteht.

Eine weitere vorteilhafte Ausgestaltung der erfindungsgemäßen Lösung ist dadurch gekennzeichnet, daß der an der Ober- und Unterseite des Einschubelements Führungsvorsprünge diagonal zueinander versetzt angeordnet sind, die in entsprechende Führungsnuten im gemeinsamen Gehäuse gleitend geführt sind.

Die diagonal versetzte Anordnung von Führungselementen an der Ober- und Unterseite des Einschubelements in Verbindung mit entsprechenden Führungsnuten in dem gemeinsamen Gehäuse ermöglicht zum einen eine erleichterte Montage und gewährleistet zum anderen, daß eine definierte Lage des Einschubmoduls im gemeinsamen Gehäuse sichergestellt ist. Darüber hinaus können die Führungselemente für Codierungszwecke verwendet werden, d.h. durch eine entsprechende Anordnung der Führungselemente kann die Zuordnung bestimmter Einschubmodule zum gemeinsamen Gehäuse sichergestellt werden, so daß eine irrtümliche Verbindung einer für die betreffende Antriebseinheit nicht verwendbaren Steuer- und Regelelektronik ausgeschlossen ist.

Schließlich ist eine weitere vorteilhafte Ausgestaltung der erfindungsgemäßen Lösung dadurch gekennzeichnet, daß sämtliche Dichtflächen in Zwei-Komponententechnik augebildet sind. Dadurch wird bereits beim Spritzen der einzelnen Elemente mit der Zwei-Komponententechnik gearbeitet und damit das Anordnen von Gummidichtungen eingespart.

An Hand eines in der Zeichnung dargestellten Ausführungsbeispieles soll der der Erfindung zugrundeliegende Gedanke näher erläutert werden. Es zeigen:
- Figur 1: eine schematische Darstellung einer bekannten Anordnung eines elektromotrischen Fensterhebers in einer Kraftfahrzeugtür;
- Figur 2: eine schematische Darstellung der erfindungsgemäßen Baugruppe eines elektromotorischen Fensterhebers mit getrennter Darstellung des Einschubmoduls;
- Figur 3: eine Stirnseitenansicht des Einschubmoduls;
- Figur 4: eine Draufsicht auf das Einschubmodul;
- Figur 5: eine Draufsicht auf die Antriebseinheit eines elektromotorischen Fensterhebers mit rechtwinklig hierzu angeordnetem Anschlußteil einer Baugruppe und
- Figur 6: eine Seitenansicht mit einem Teilschnitt durch die Baugruppe entlang der Linie A-A der Figur 5.

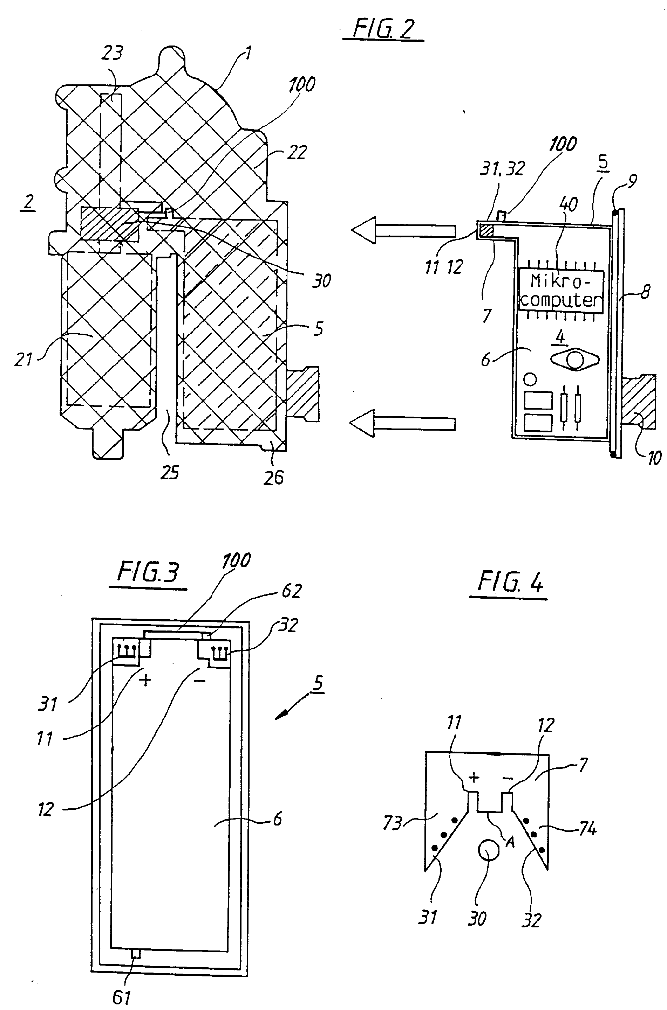

Figur 2 zeigt die in einem gemeinsamen Gehäuse 1 integrierte Baugruppe bestehend aus einer Antriebseinheit 21 und 22 sowie einem Einschubmodul 5, das die Steuer- und Regelelektronik 4 sowie die Kontaktvorrichtung für die Stromversorgung der Antriebseinheit und Teile des Drehzahlsensors enthält.

Wie Figur 2 verdeutlicht, ist das Einschubmodul 5 geschlossen in das gemeinsame Gehäuse 1 der Baugruppe einsetzbar und wird von diesem bei eingesetztem Zustand feuchtigkeitsdicht umgeben bzw. abgeschlossen. Dabei wird das Einschubmodul 5 in die im gemeinsamen Gehäuse 1 vorgesehene Einschuböffnung bis zu einem durch eine Rippe 100 gegebenen Anschlag eingesetzt. Im eingesetzten Zustand schließt die Außenwand des Einschubmoduls 5 bündig und feuchtigkeitsdicht mit dem gemeinsamen Gehäuse 1 so ab, daß die im Inneren des gemeinsamen Gehäuses 1 liegenden Teile der Baugruppe keiner Feuchtigkeitsbeanspruchung ausgesetzt sind, im Innern sich bildender Wasserdampf aber durch die Membran jederzeit austreten kann.

Figur 2 zeigt auch in einer getrennten Darstellung den Aufbau des Einschubmoduls 5, das in Richtung der beiden eingetragenen Pfeile in die entsprechende Einschuböffnung im gemeinsamen Gehäuse 1 einsetzbar ist.

Das Einschubmodul 5 besteht aus einem Einschubelement 6, auf dem die Steuer- und Regelelektronik 4 einschließlich eines Mikrocomputers 40 angeordnet ist. Der Mikrocomputer 40 kann in beliebiger Weise in Abhängigkeit vom jeweiligen Kraftfahrzeugtyp, in dem die Baugruppe eingesetzt wird, programmiert werden. Senkrecht zum Einschubelement 6 ist an einer Stirnseite eine Außenwand 8 mit dem Einschubelement 6 verbunden, die im eingesteckten Zustand des Einschubmoduls 5 den äußeren Abschluß des Einschubmoduls 5 bildet und bündig mit der Gehäuseaußenwand des gemeinsamen Gehäuses 1 bildet.

Zum feuchtigkeitsdichten Abschluß ist in einer Abstufung der Außenwand 8 eine umlaufende Dichtung 9 vorgesehen, die im eingestecktem Zustand des Einschubmoduls 5 das Eindringen von Feuchtigkeit in das Innere des gemeinsamen Gehäuses 1 verhindert. Eine feuchtigkeitsdichte Kabeldurchführung 10 bzw. eine entsprechende Strom- oder Signal-Steckverbindung ist in der Außenwand 8 vorgesehen und stellt die Verbindung sowohl zum Bedienungsschalter als auch zur Stromversorgung der in Figur 2 dargestellten Baugruppe her.

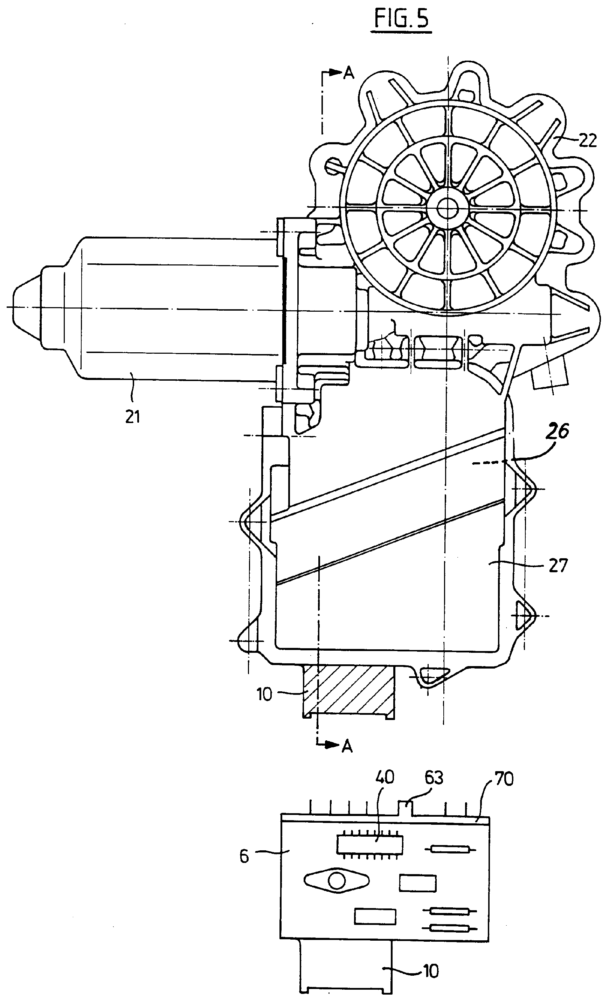

An der gegenüberliegenden Stirnseite des Einschubelementes 6 ist ein verlängertes Steckelement 7 vorgesehen, das in dem dargestellten Ausführungsbeispiel im Bereich der Oberseite des Einschubmoduls 5 als Verlängerung der Oberseite ausgebildet ist. Das Steckelement 7, dessen Konfiguration in den nachstehend beschriebenen Figuren 3 und 4 in Einzelheiten zu entnehmen ist, enthält zum einen die Steckkontakte 11, 12 zur Stromversorgung der Antriebseinheit und zum anderen als Empfängerteile 31, 32 ausgebildete Teile des Drehzahlsensors.

Zur Montage der elektromotorischen Fensterheber-Baugruppe mit integrierter Steuer- und Regelelektronik und Drehzahlsensor ist es somit lediglich erforderlich, das Einschubmodul 5 in Pfeilrichtung in die entsprechende Öffnung im gemeinsamen Gehäuse 1 bis zu einem vorgesehenen Anschlag einzuschieben, wobei in dieser Stellung ein bündiger Abschluß der Außenfläche 8 des Einschubmoduls 5 mit der Außenwand des gemeinsamen Gehäuses 1 gegeben ist. In dieser Stellung ist sowohl der Kontakt zur Stromversorgung der im gemeinsamen Gehäuse 1 angeordneten Antriebseinheit 2 als auch eine Verbindung der im Einschubmodul angeordneten Empfängerteile 31, 32 des Drehzahlsensors mit den mit der Rotorwelle 23 verbundenen Geberteil 30 des Drehzahlsensors hergestellt, so daß eine einwandfreie Drehzahlerfassung gewährleistet ist. Diese Drehzahlerfassung erfolgt vorzugsweise berührungsfrei mittels Hall-Sensoren oder einer fotoelektronischen bzw. induktiven Erfassungseinrichtung.

Figur 3 zeigt eine Stirnseitenansicht des Einschubmoduls 5, während in Figur 4 eine Draufsicht auf das Einschubmodul 5 dargestellt ist.

Das an der Stirnseite vorgesehene Steckelement 7 des Einschubmoduls 5 enthält eine mittige Anschlagfläche (A) zur Justierung zweier Hall-Sensoren 31, 32, die zu beiden Seiten einer Rippe 100 angeordnet sind. Sie befinden sich auf einer abgeschrägten Fläche 73, 74, die somit teilweise den Geberteil 30 des Drehzahlsensors zur besseren elektromagnetischen Verbindung umgeben.

Zwischen den Hall-Sensoren 31, 32, die somit den Empfängerteil des Drehzahlsensors bilden, und der Rippe 100 zur Justierung der Hall-Sensoren 31, 32 sind ein positiver und negativer Steckkontakt 11, 12 vorgesehen, die mit entsprechenden Gegenkontakten bei vollständig eingestecktem Einschubmodul verbindbar sind, die mit den Stromversorgungsleitungen der Antriebseinheit verbunden sind.

In dem dargestellten Ausführungsbeispiel sind die Steckkontakte 11, 12 als Steckbuchsen ausgeführt, in die entsprechend vorstehende Steckkontakte der Antriebseinheit einsteckbar sind. Selbstverständlich können die Steckkontakte 11, 12 am Einschubmodul 5 auch als Stecker ausgebildet sein, die in entsprechende Steckbuchsen der Antriebseinheit einsteckbar sind.

An der Ober- und Unterseite des Einschubelements 6 sind Führungsstege 61, 62 diagonal zueinander angeordnet, die in entsprechenden Führungsnuten in der Gehäuseöffnung des gemeinsamen Gehäuses 1 gleiten und somit eine sichere und lagerichtige Einführung des Einschubmoduls 5 in die Gehäuseöffnung ermöglichen. Mit Hilfe der Führungsstege wird ein Verkanten beim Einsetzen des Einschubmoduls 5 verhindert und somit ein Schubladeneffekt erzeugt, zugleich können die Führungsstege 61, 62 aber auch zur Codierung des Einschubmoduls 5 dienen, so daß ein in bestimmter Weise programmierter Mikrocomputer nur für eine bestimmte Antriebseinheit verwendbar ist.

Figur 5 zeigt eine Draufsicht auf eine Variante der erfindungsgemäßen Lösung mit einem von der Antriebseinheit 21, 22 abgewinkelten Anschlußteil 26 des gemeinsamen Gehäuses 1.

In dieser Ausführungsform wird die Platine zur Aufnahme der Steuer- und Regelelektronik 4 nicht von einer Stirnseite des Anschlußteils in das gemeinsame Gehäuse 1 eingesteckt sondern durch die geöffnete Deck- oder Bodenseite in das Anschlußteil 26 eingefügt. Ein das Anschlußteil 26 verschließender Deckel 27 wird wahlweise aufgeklappt, abgehoben oder waagerecht verschoben, so daß der Innenraum des Anschlußteils 26 zur Aufnahme der Platine 6 frei wird.

Alternativ hierzu kann die Platine 6 unmittelbar auf der Innenseite des Deckels 27 angebracht werden, was zu einer platzsparenden und übersichtlichen Anordnung führt.

Nicht näher dargestellte Gegensteckkontakte im Anschlußteil 26 dienen zur Verbindung mit einer Kontakteinrichtung 70, die mehrere Kontaktstifte aufweist, die mit der Steuer- und Regelelektronik 4 der Platine 6 verbunden sind.

Nach dem Verbinden der Kontakteinrichtung 70 mit den Gegensteckkontakten wird der Anschlußteil 26 wieder verschlossen, wobei eine mit der Platine 6 verbundene Strom- und Signaldurchführung 10 im geschlossenen Zustand des Anschlußteils 26 des gemeinsamen Gehäuses 1 aus einer Stirnwand des Anschlußteils 26 herausragt, so daß die elektrische Verbindung zur Platine 6 über einen Kabelbaum hergestellt werden kann.

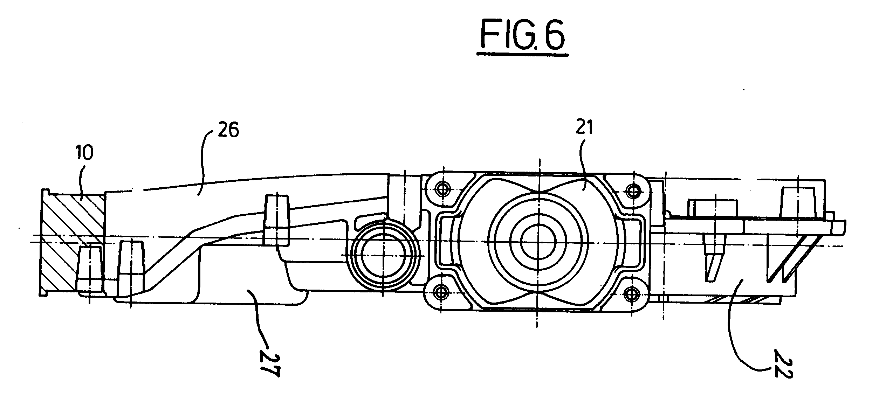

Figur 6 verdeutlicht in einer Seitenansicht mit einem Teilschnitt entlang der Linie A-A gemäß Figur 5 die Zuordnung der Antriebseinheit 21, 22 zum Anschlußteil 26 des gemeinsamen Gehäuses 1 sowie die Anordnung der Platine 6 in dem Anschlußteil 26 sowie der Strom- und Signaldurchführung 10 im Zusammenhang mit der Unterbringung der Platine 6 im Anschlußteil 26.

Aus der vorstehenden Beschreibung eines Ausführungsbeispiels des erfindungsgemäßen elektromotorischen Fensterhebers wird der geschlossene, kompakte Aufbau der Baugruppe deutlich. Neben einer deutlich erleichterten Montage und Verringerung der Verbindungselemente der einzelnen Baugruppenteile wird ein absoluter Feuchtigkeitsschutz erzielt und die Möglichkeit von Verkabelungsfehlern beseitigt. Gleichzeitig wird die Drehzahlabfrage zur Regelung der Antriebseinheit beim Heben und Senken der Fensterscheibe deutlich erleichtert und vermieden, daß Fehler bei der Istwerterfassung der Drehzahl auftreten.

Die noch erforderlichen Steckelemente können als billige Stecker ausgeführt werden, da sie in einem vollständig wasserdichten Raum angeordnet sind, so daß Korrosionsprobleme ausscheiden.

Schließlich können durch den modularen Aufbau unterschiedlichste Elektroniken auf dem Einschubmodul angeordnet werden, so daß wahlweise Einklemmschutzschaltungen oder Regelschaltungen zum Hoch- und Tiefgehen der Fensterscheiben sowie kombinierte Fensterscheibenregelungen mit einer Zentralverriegelung vorgesehen werden können.

## Patentansprüche

1. Elektromotorischer Fensterheber zum Einbau in Kraftfahrzeugtüren mit einer Antriebseinheit (2), die von einer in einem feuchtigkeitsdichten Gehäuse (1) angeordneten Steuer- und Regelelektronik (4) ansteuerbar ist, die auf einer in ein Anschlußteil (26) des Gehäuses (1) einsetzbaren oder einsteckbaren Platine (6) angeordnet ist, die mit einem Einschubmodul (5) verbunden ist, das in eine Öffnung des Anschlußteils (26) des Gehäuses (1) einsteckbar ist und Steckkontakte (11, 12) aufweist, die mit entsprechenden Gegensteckkontakten der Antriebseinheit (2) verbindbar sind und eine dicht an dem Gehäuse (1) anliegende Außenfläche (8) sowie ein Empfangsteil (31, 32) eines Drehzahlsensors (3) aufweist, der mit der Antriebseinheit (2) verbunden und in dem Gehäuse (1) angeordnet ist und der bei in das Gehäuse (1) eingestecktem Einschubmodul (5) das mit der Rotorwelle (23) der Antriebseinheit (2) verbundene Geberteil (30) des Drehzahlsensors (3) kontaktiert oder dem Geberteil (30) des Drehzahlsensors (3) berührungsfrei gegenübersteht, wobei ein der Außenfläche (8) gegenüberliegendes Steckelement (7) den Empfangsteil (31, 32) des Drehzahlsensors (3) und die Steckkontakte (11, 12) enthält,
**dadurch gekennzeichnet**,
daß das Steckelement (7) eine stirnseitige, mittige Anschlagfläche (A) zum Justieren der Empfangsteile (31, 32) des Drehzahlsensors (3) aufweist, die zu beiden Seiten der Anschlagfläche (A), einer Rippe 100 und den beiderseits an die Rippe (100) anschließenden Steckkontakten (11, 12) auf abgeschrägten, den Gebesteil (30) teiweise umgebenden Flächen (73,74) angeordnet sind.

2. Elektromotorischer Fensterheber nach Anspruch 1, **dadurch gekennzeichnet**, daß der Drehzahlsensor (3) aus einem Magneten (30) und die Empfangsteile aus einem Hall-Sensorempfänger (31, 32) bestehen, die zu beiden Seiten der Rippe (100) des Steckelements (7) angeordnet sind und den mit der Rotorwelle (23) verbundenen Magneten (30) teilweise umgeben, und daß an der Ober- und Unterseite des Einschubelements (6) Führungsvorsprünge (61, 62) diagonal zueinander versetzt angeordnet sind, die in entsprechende Führungsnuten im gemeinsamen Gehäuse (1) gleitend geführt sind.

3. Elektromotorischer Fensterheber nach Anspruch 1, **dadurch gekennzeichnet**, daß der Drehzahlsensor (3) aus einem fotoelektrischen oder induktiven Sensor besteht, wobei der Sensorgeber mit der Rotorwelle (23) und der Sensorempfänger mit dem Steckelement (7; 70) des Einschubmoduls (5) verbunden ist, und daß an der Ober- und Unterseite des Einschubelements (6) Führungsvorsprünge (61, 62) diagonal zueinander versetzt angeordnet sind, die in entsprechende Führungsnuten im gemeinsamen Gehäuse (1) gleitend geführt sind.

4. Elektromotorischer Fensterheber nach einem der vorangehenden Ansprüche, **dadurch gekennzeichnet**, daß die Platine (6) auf einer Seite mit der senkrecht zur Platine (6) angeordneten Außenfläche (8) des Einschubmoduls (5) verbunden ist, daß in der Außenfläche (8) des Einschubmoduls (5) eine Strom- und Signaldurchführung (10) zum Verbinden der Steuer- und Regelelektronik (4) mit einer Kraftfahrzeug-Batterie und einem Steuerschalter angeordnet ist und daß in eine umlaufende Nut der Außenfläche (8) oder in einer Abstufung der Außenfläche (8) eine Dichtung (9) eingesetzt ist.

5. Elektromotorischer Fensterheber nach einem der vorangehenden Ansprüche, **dadurch gekennzeichnet**, daß die Platine (6) in den mittels eines Deckels (7) verschließbaren Innenraum des Anschlußteils (26) des gemeinsamen Gehäuses (1) einsetzbar und über eine Kontakteinrichtung (70) mit den Gegenkontakten der Antriebseinheit (2) verbindbar ist.

6. Elektromotorischer Fensterheber nach einem der vorangehenden Ansprüche 1 bis 4, **dadurch gekennzeichnet**, daß die Platine (6) auf der Innenseite des Deckels (7) befestigt und über eine Kontakteinrichtung (70) mit den Gegenkontakten der Antriebseinheit (2) verbindbar ist.

7. Elektromotorischer Fensterheber nach Anspruch 5 oder 6, **dadurch gekennzeichnet**, daß das Anschlußteil (26) des gemeinsamen Gehäuses (1) senkrecht zum Elektromotor (21) und zum Getriebe (22) der Antriebseinheit (2) angeordnet ist.

8. Elektromotorischer Fensterheber nach einem der vorangehenden Ansprüche, **dadurch gekennzeichnet**, daß eine mit der Platine (6) verbundene Strom- und Signaldurchführung (10) bei in das Anschlußteil (26) eingesetzter Platine (6) durch eine Stirnseite des Anschlußteils (26) ragt.

## Claims

1. Electro-motorized window winder for installation in vehicle doors with a drive unit (2) which is controllable by a control and regulator electronics unit (4) mounted in a watertight housing (1), which is mounted on a plate (6) which can be inserted or pushed into a connector part (26) of the housing (1) and which is connected to an insert module (5) which can be fitted into an opening of the connector part (26) of the housing (1) and has plug contacts (11,12) which are connectable with corresponding opposed plug contacts of the drive unit (2) and has an outside surface (8) tightly adjoining the housing (1) and also has a receiver part (31,32) of a speed sensor (3) which is connected to the drive unit (2) and is mounted in the housing (1) and which when the insert module (5) is inserted in the housing (1) contacts the transmitter part (30) of the speed sensor (3) connected to the rotor shaft (23) of the drive unit (2), or opposes the transmitter part (30) of the speed sensor (3) without contact wherein a plug element (7) opposite the outside face (8) contains the receiver part (31,32) of the speed sensor (3) and the plug contacts (11,12),
characterised in that the plug element (7) has an end side central stop face (A) for locating the receiver parts (31,32) of the speed sensor (3), and the receiver parts are arranged on either side of the abutment face (A) of a rib (100) and on either side of the plug contacts (11,12) which are on inclined surfaces (73,74) partially surrounding the transmitter part (30) and which adjoin the rib (100) on both sides.

2. Electro-motorized window winder according to claim 1 characterised in that the speed sensor (3) consists of a magnet (30) and the receiver parts consist of an echo sensor receiver (31,32),which are mounted on both sides of the rib (100) of the plug element (7) and partially enclose the magnet (30) which is connected to the rotor shaft (23), and that on the upper and lower sides of the push-in element (6) there are guide projections (61,62) arranged diagonally off-set relative to each other and guided for sliding movement in corresponding guide grooves in the common housing (1).

3. Electro-motorized window winder according to claim 1 characterised in that the speed sensor (3) consists of a photoelectric or inductive sensor wherein the sensor transmitter is connected to the rotor shaft (23) and the sensor receiver is connected to the push-in element (7;70) of the insert module (5) and that on the upper and lower side of the push-in element (6) there are guide projections (61,62) arranged diagonally off-set relative to each other and guided for sliding movement in corresponding guide grooves in the common housing (1).

4. Electro-motorized window winder according to one of the preceding claims characterised in that the plate (6) is connected on one side to the outside face (8) of the insert module (5) perpendicular to the plate (6), that in the outside face (8) of the insert module (5) there is a current and signal lead (10) for connecting the control and regulator electronics unit (4) to a vehicle battery and a control switch and that a seal (9) is inserted in a circumferential groove of the outside face (8) or in a step of the outside face (8).

5. Electro-motorized window winder according to one of the preceding claims characterised in that the plate (6) is insertable into the inside of the connecting part (26) of the common housing (1) which is closable by a lid (7) and the plate is connectable by a contact device (70) with the counter contacts of the drive unit (2).

6. Electro-motorized window winder according to one of the preceding claims 1 to 4 characterised in that the plate (6) is fixed on the inside of the lid (2) and is connectable by a contact device (70) with the counter contacts of the drive unit (2).

7. Electro-motorized window winder according to claim 5 or 6 characterised in that the connecting part (26) of the common housing (1) is mounted perpendicular to the electric motor (21) and to the gear (22) of the drive unit (2).

8. Electro-motorized window winder according to one of the preceding claims characterised in that a current and signal lead (10) connected to the plate (6) projects through an end side of the connecting part (26) when the plate (6) is inserted in the connecting part (26).

## Revendications

1. Lève-vitre à moteur électrique, pour le montage dans des portières d'un véhicule automobile, comportant un ensemble d'entraînement (2) pouvant être commandé par un dispositif électronique de commande et de réglage (4) qui est agencé dans un boîtier (1) étanche à l'humidité et qui est agencé sur une plaquette (6) pouvant être insérée ou être enfichée dans une partie de raccordement (26) du boîtier (1) et étant reliée à un module enfichable (5) qui peut être enfiché dans une ouverture de la partie de raccordement (26) du boîtier (1) et présente des contacts enfichables (11, 12) pouvant être reliés à des contacts enfichables complémentaires correspondants de l'ensemble d'entraînement (2) et qui présente une surface externe (8), appliquée de façon étanche sur le boîtier (1), ainsi qu'une partie réceptrice (31, 32) d'un détecteur de vitesse de rotation (3) qui est relié à l'ensemble d'entraînement (2) et est agencé dans le boîtier (1) et qui, lorsque le module enfichable (5) est enfiché dans le boîtier (1), entre en contact avec la partie émettrice (30) du détecteur de vitesse de rotation (3) reliée à l'arbre de rotor (23) de l'ensemble d'entraînement (2) ou est en vis-à-vis, sans contact, avec la partie émettrice (30) du détecteur de vitesse de rotation (3), un élément à broches (7), situé à l'opposé de la surface externe (8), contenant la partie réceptrice (31, 32) du détecteur de vitesse de rotation (3) et les contacts enfichables (11, 12), caractérisé en ce que l'élément à broches (7) présente une surface de butée (A) médiane, du côté frontal, pour l'ajustage des parties réceptrices (31, 32), du détecteur de vitesse de rotation (3), qui sont agencées des deux côtés de la surface de butée (A) d'une nervure (100) et sur les contacts enfichables (11, 12) contigus des deux côtés à la nervure (100), sur des surfaces (73, 74) en biais qui entourent partiellement la partie émettrice (30).

2. Lève-vitre à moteur électrique suivant la revendication 1, caractérisé en ce que le détecteur de vitesse de rotation (3) est constitué d'un aimant (30) et les parties réceptrices, qui sont agencées des deux côtés de la nervure (100) de l'élément à broches (7) et qui entourent partiellement l'aimant (30) relié à l'arbre de rotor (23), sont constituées d'un récepteur de détection à effet Hall (31, 32) et en ce que sur les côtés supérieur et inférieur de l'élément enfichable (6) sont agencées de façon décalée en diagonale l'une par rapport à l'autre des saillies de guidage (61, 62) qui sont guidées de façon coulissante dans le boîtier commun (1), dans des rainures de guidage correspondantes.

3. Lève-vitre à moteur électrique suivant la revendication 1, caractérisé en ce que le détecteur de vitesse de rotation (3) est constitué par un détecteur photoélectrique ou inductif, l'émetteur du détecteur étant relié à l'arbre de rotor (23) et le récepteur du détecteur étant relié à l'élément à broches (7, 70) du module enfichable (5), et en ce que sur les côtés supérieur et inférieur de l'élément enfichable (6) sont prévues de façon décalée en diagonale l'une par rapport à l'autre des saillies de guidage (61, 62) qui sont guidées de façon coulissante dans le boîtier commun (1), dans des rainures de guidage correspondantes.

4. Lève-vitre à moteur électrique suivant l'une des revendications précédentes, caractérisé en ce que la plaquette (6) est reliée d'un côté à la surface externe (8), du module enfichable (5), agencée perpendiculairement à la plaquette (6), en ce que dans la surface externe (8) du module enfichable (5) est agencé un passage de courant et de signal (10) pour la liaison du dispositif électronique de commande et de réglage (4) à une batterie du véhicule, et à un commutateur de commande et en ce qu'un joint d'étanchéité (9) est inséré dans une rainure périphérique de la surface externe (8) ou dans un gradin de la surface externe (8).

5. Lève-vitre à moteur électrique suivant l'une des revendications précédentes, caractérisé en ce que la plaquette (6) peut être insérée dans l'espace interne, qui peut être fermé au moyen d'un couvercle (7), de la partie de raccordement (26) du boîtier commun (1) et peut être reliée par un dispositif de contacts (70) aux contacts complémentaires de l'ensemble d'entraînement (2).

6. Lève-vitre à moteur électrique suivant l'une des revendications précédentes 1 à 4, caractérisé en ce que la plaquette (6) est fixée sur le côté interne du couvercle (7) et peut être reliée par un dispositif de contact (70) aux contacts complémentaires de l'ensemble d'entraînement (2).

7. Lève-vitre à moteur électrique suivant la revendication 5 ou 6, caractérisé en ce que la partie de raccordement (26) du boîtier commun (1) est agencée perpendiculairement au moteur électrique (21) et au mécanisme (22) de l'ensemble d'entraînement (2).

8. Lève-vitre à moteur électrique suivant l'une des revendications précédentes, caractérisé en ce qu'un passage de courant et de signal (10) relié à la plaquette (6) fait saillie au travers d'un côté frontal de la partie de raccordement (26) lorsque la plaquette (6) est insérée dans la partie de raccordement (26).
